# EUROPÄISCHE PATENTSCHRIFT

(11) **EP 1 278 401 B1**
(45) Veröffentlichungstag und Bekanntmachung des Hinweises auf die Patenterteilung: **07.12.2005**
(21) Anmeldenummer: 01440192.1
(22) Anmeldetag: 27.06.2001
(51) Int. Cl.: H05B 33/08

(54) **Leistungsschaltung zur Generierung eines konstanten LED-Signals**
Power converter for generating a constant LED signal
Convertisseur de puissance pour générer un signal de LED constant

(43) Veröffentlichungstag der Anmeldung: 22.01.2003
(73) Patentinhaber: ALCATEL, 75008 Paris (FR)
(72) Erfinder: Klose, Bernd, D-71679 Asperg (DE)
(74) Vertreter: Menzietti, Domenico

(56) Entgegenhaltungen:
- DE-A- 19 810 827
- GB-A- 2 224 374
- GB-A- 2 355 816
- US-A- 5 495 147
- US-A- 5 783 909
- US-A- 6 127 784
- HOFFART F: "SERIES LED DRIVER OPERATES ON 3-V INPUT" ELECTRONIC DESIGN, PENTON PUBLISHING, CLEVELAND, OH, US, Bd. 45, Nr. 28, 15. Dezember 1997 (1997-12-15), Seite 106,108 XP000752713 ISSN: 0013-4872
- "NIEDERSPANNUNGS-LED-TREIBER" RADIO FERNSEHEN ELEKTRONIK, VEB VERLAG TECHNIK. BERLIN, DE, Bd. 48, Nr. 3, 1999, Seite 70 XP000887487 ISSN: 1436-1574
- SHERMAN L: "LOGIC POWER DRIVES HIGH-INTENSITY LEDS" ELECTRONIC DESIGN, PENTON PUBLISHING, CLEVELAND, OH, US, Bd. 45, Nr. 23, 23. Oktober 1997 (1997-10-23), Seite 142,144 XP000752929 ISSN: 0013-4872

## Beschreibung

Die Erfindung betrifft eine Leistungsschaltung zur Generierung eines konstanten LED-Signals sowie ein Verfahren zur Temperaturregelung mindestens einer LED.

LEDs werden in zahlreichen optischen Systemen eingesetzt, beispielsweise in der Eisenbahnsignaltechnik; LED = Leuchtdiode = Light Emitting Device.

Ziel beim Bahnsignal ist die Aussendung eines konstanten, temperaturunabhängigen Lichts. Die Lichtausbeute von LEDs ist bei konstantem Flussstrom stark von der Temperatur des Chip oder der Platine abhängig, auf dem bzw. auf der die LEDs angebracht sind. Da beim Einsatz von LEDs in einer Outdoor-Bahnsignalanlage starke Schwankungen der Umgebungstemperatur auftreten, müssen die LEDs geregelt werden.

Bei einer Variante wird das ausgesendete Licht der LEDs über einen externen optischen Detektor gemessen und der Flussstrom abhängig von den gemessenen Ergebnissen nachgeregelt. Es wird ein zusätzlicher optischer Sensor benötigt samt zugehöriger Verdrahtung.

In GB 2 355 816 A ist ein Verfahren zur Temperaturregelung des Lichts mindestens einer LED offenbart, bei dem über eine Rückkoppelschleife der Flussstrom der LED durch Pulsweitenmodulation in Abhängigkeit vom gemessenen Spannungsabfall an einem ohmschen Widerstand in Reihe zur mindestens einen LED derart geregelt wird, dass das ausgesendete Licht der mindestens einen LED konstant ist.

In SHERMAN L. "Logic Power Drives High-Intensity LEDs", Electronic Design, Penton Publishing, Cleveland, OH, US, Bd. 45, Nr. 23, 23. Oktober 1997, Seite 142, 144 (ISSN: 0013-4872) ist eine Leistungsschaltung fuer LEDs offenbart, bei der Steuerspannungen fuer Teile der Leistungschaltung in Abhaengigkeit vom gemessenen Spannungsabfall am in Reihe zur mindestens einen LED geschalteten Widerstand und vom gemessenen Spannungsabfall an einem parallel zur mindestens einen LED geschalteten Widerstand berechnet werden. Zum Zwecke des Ein- und Ausschaltens der mindestens einen LED ist ein separater PIN vorgesehen.

Aufgabe der Erfindung ist es eine alternative Leistungsschaltung zur Generierung eines konstanten LED-Signals und ein alternatives Verfahren zur Temperaturregelung des Lichts mindestens einer LED bereitzustellen.

Gelöst wird diese Aufgabe durch ein Verfahren gemäß Patentanspruch 1 und eine Leistungsschaltung gemäß Patentanspruch 2.

Um das ausgesendete Licht mindestens einer LED konstant zu halten wird der Flussstrom der mindestens einen LED mit einer Pulsweitenmodulation moduliert in Abhängigkeit vom Spannungsabfall an einem Widerstand in Reihe zur mindestens einen LED. Es existiert eine direkte Abhängigkeit von Stärke des ausgesendeten Lichtes, Chip-/Platinentemperatur und Spannungsabfall. Auf Grund dessen ist es ausreichend den Spannungsabfall zu regeln. Dies wird durch eine Rückkoppelschleife erreicht, die den Flussstrom der mindestens einen LED regelt in Abhängigkeit vom gemessenen Spannungsabfall am Widerstand in Reihe zur mindestens einen LED.

Die LEDs eines Lichtpunktes am Bahnsignal werden mit einem konstanten Gleichstrom betrieben. Die Steuerung des ausgesendeten Lichts erfolgt durch Pulsweitenmodulation des Flussstromes durch die LEDs. Die Abhängigkeit des ausgesendeten Lichtes der LEDs von der Temperatur bei konstantem Flussstrom ist bekannt. Zur Steuerung der Pulsweite ist es deshalb ausreichend, wenn die Chiptemperatur bekannt ist. Diese wird im eingeschalteten Zustand - bekannter Flussstrom - durch Messen des Spannungsabfalls über die mindestens eine LED bestimmt. Der Temperaturgradient ist bekannt und im erforderlichen Temperaturbereich konstant.

Alle LEDs eines Lichtpunktes können über eine Zweidrahtleitung gesteuert und überwacht werden. Es sind keine Sensorleitungen erforderlich.

Alle LEDs eines Lichtpunktes können in die Temperaturmessung einbezogen werden. Exemplarstreuungen gleichen sich über die hohe Anzahl der LEDs aus.

Bei einer Bahnsignalanlage mit einer Vielzahl von LEDs, beispielsweise 180, trägt jede LED individuell zur Nachregelung des gesamten, ausgesendeten Lichtes bei, wodurch ein sehr genaues Konstant-Halten des ausgesendeten Lichtes ermöglicht wird.

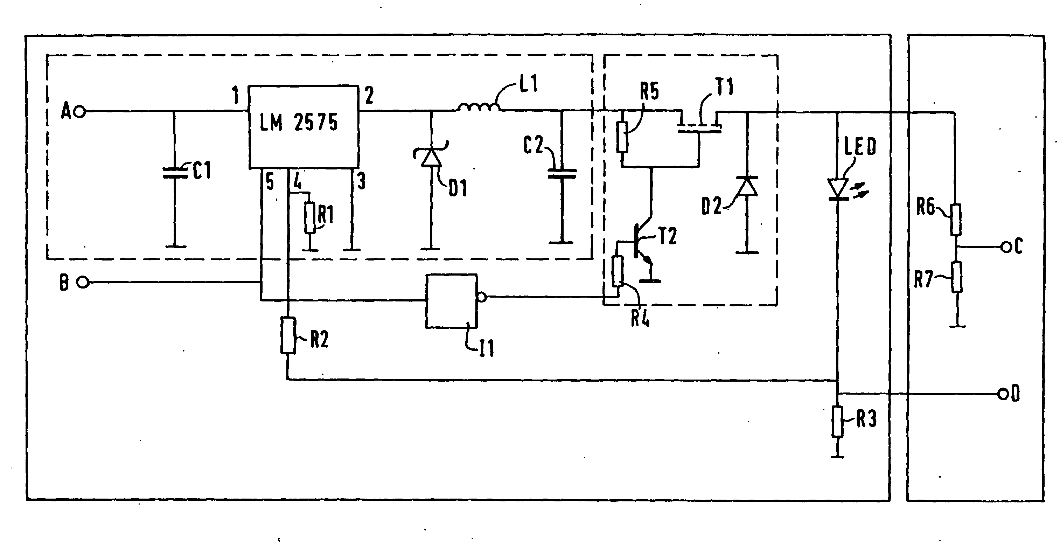

Im folgenden wird die Erfindung anhand eines Ausführungsbeispiels unter Zuhilfenahme einer Figur erläutert. Die Figur zeigt den schematischen Aufbau einer Leistungsschaltung zur Generierung eines konstanten LED-Signals.

Die Leistungsschaltung beinhaltet eine Stromquelle LM 2575, die fünf Ports 1, 2, 3, 4, 5 aufweist und zur Generierung eines konstanten Stromes dient. Port 1 ist über Anschluss A mit einer Gleichspannungsquelle verbunden und über einen Kondensator C1 mit Masse. Die Gleichspannungsquelle liefert beispielsweise eine Gleichspannung im Bereich von 36,5 bis 37 Volt. Der Wert des Kondensators C1 beträgt beispielsweise 100 µF.

Port 2 ist mit einer Spule L1 und über eine Schottky-Diode D1 mit Masse verbunden. Der Wert der Spule beträgt beispielsweise 680 µH.

Port 3 ist mit Masse verbunden.

Port 4 ist mit einem ersten ohmschen Widerstand R1 und einen zweiten ohmschen Widerstand R2 verbunden. Der Wert von Widerstand R1 beträgt beispielsweise 1,2 kΩ. Der Wert von Widerstand R1 beträgt beispielsweise 1, 5 kΩ.

Port 5 ist mit dem Eingang eines Inverters I1 verbunden.

Die der Stromquelle abgewandte Seite der Spule L1 ist über einen Kondensator C2 mit Masse verbunden, mit einem ohmschen Widerstand R5 und mit einem MOSFET-Transistor T1. Der Wert des Kondensators C2 beträgt beispielsweise 47 µF. Der Wert von Widerstand R5 beträgt beispielsweise 10 kΩ.

Die der Spule L1 abgewandte Seite des Widerstands R5 ist über einen npn-Bipolartransistor T2 mit Masse verbunden und mit dem Steuereingang von Transistor T1. Der Steuereingang des Bipolartransistors T2 ist über einen ohmschen Widerstand R4 mit dem Ausgang des Inverters I1 verbunden. Der Wert von Widerstand R4 beträgt beispielsweise 1 kΩ.

Die der Spule L1 abgewandte Seite des Transistors T1 ist dreifach mit Masse verbunden, zum einen über eine Diode D2, zum anderen über eine Reihenschaltung aus einer Leuchtdiode LED und einem ohmschen Widerstand R3, und zum dritten über eine Reihenschaltung aus einem ohmschen Widerstand R6 und einem ohmschen Widerstand R7. Der Wert von Widerstand R3 beträgt beispielsweise 5,6 kΩ. Der Wert von Widerstand R6 beträgt beispielsweise 10 kΩ. Der Wert von Widerstand R7 beträgt beispielsweise 1,3 kΩ. Zwischen Leuchtdiode LED und Widerstand R3 ist die der Stromquelle abgewandte Seite des Widerstands R2 angeschaltet.

Anstelle der einen Leuchtdiode LED kann auch eine Vielzahl von Leuchtdioden verschaltet sein, beispielsweise als Reihen- oder Parallelschaltung oder in einer Mischform. Leuchtdiode LED wird z.B. durch eine Parallelschaltung von Leuchtdioden ersetzt. Beispielsweise sind 180 Leuchtdioden zur Erzeugung eines Lichtpunktes einer Bahnsignalanlage verschaltet.

Ferner sind Anschlüsse B, C, D vorgesehen. Anschluss B befindet sich zwischen Port 5 und Eingang des Inverters I1. Anschluss C befindet sich zwischen Widerstand R6 und Widerstand R7. Anschluss D befindet sich zwischen Leuchtdiode LED und Widerstand R3.

Anschluss B dient dazu, das Steuersignal zu liefern, um das Ausgangssignal der Stromquelle LM 2575 mit einer Pulsweitenmodulation zu takten.

Anschluss D dient dazu, den Spannungsabfall über den Widerstand R3 zu messen.

Anschluss C dient dazu, den Spannungsabfall über den Widerstand R7 zu messen.

Die Anschlüsse B, C, D sind mit mindestens einer nicht dargestellten Verarbeitungseinrichtung verbunden, beinhaltend z.B. einen Mikrocontroller. Die Verarbeitungseinrichtung dient dazu, aus den gemessenen Spannungen an den Anschlüssen C, D die Steuerspannung für den Anschluss B zu berechnen. Dafür wird zunächst durch Differenzbildung der gemessenen Spannungen an den Anschlüssen C, D, gegebenenfalls mit entsprechender Gewichtung der Spannung C, die Spannung über der oder den Leuchtdioden bestimmt. Mittels dieser Spannung wird unter Zuhilfenahme eines in einem nicht dargestellten Speicher abgespeicherten Diagramms über die Chiptemperatur, auf das die Verarbeitungseinrichtung Zugriff hat, das ausgesendete Licht der Leuchtdiode(n) ermittelt. Im Speicher ist beispielsweise eine Zuordnung von einzelnen Spannungswerten zu Chiptemperatur und einzelnen Lichtwerten abgespeichert. Die Angabe der Chiptemperatur ist optional. Die Zuordnungsvorschrift kann anstelle von einzelnen Werten auch eine Zuordnungsvorschrift in Form einer mathematischen Funktion oder dergleichen beinhalten. Mittels einer entsprechend programmierten Verarbeitungseinrichtung ist somit aus den gemessenen Spannungen der Wert des aktuell ausgesendeten Lichts ableitbar und feststellbar.

Im Speicher ist zudem der Sollwert des Lichts abgespeichert. Durch Vergleich von Soll- und Istwert des Lichts der Leuchtdiode(n) wird in der Verarbeitungseinrichtung die erforderliche Pulsweite errechnet und in Form einer Steuerspannung an Anschluss B weitergeleitet.

Über die Verarbeitungseinrichtung wird somit eine Rückkoppelschleife zur Temperaturregelung des Lichts einer oder mehrerer Leuchtdioden generiert, um die Aussendung eines konstanten, temperaturunabhängigen Lichtes zu ermöglichen.

Die Leistungsschaltung schafft damit eine getaktete Stromquelle zur Pulsweitenmodulation des Flussstroms der Leuchtdiode(n) in Abhängigkeit von einem indirekt gemessenen Spannungsabfall an der Leuchtdiode bzw. den Leuchtdioden.

Die über Anschluss B zugeführte Steuerspannung zur Pulsweitenmodulation öffnet bzw. schließt Transistor T2, was zur Folge hat, dass Transistor T1 öffnet bzw. schließt und dadurch der von der Stromquelle generierte Gleichstrom zur Leuchtdiode LED weitergeleitet wird bzw. nicht.

Beim Ausführungsbeispiel ist ein Spannungsteiler durch Widerstände R6, R7 vorgesehen. Der Spannungsteiler ist optional. Alternativ werden Widerstände R6 und R7 weggelassen und Anschluss C wird mit Leuchtdiode LED, Diode D2 und Transistor T1 verbunden. Der Spannungsabfall an der Leuchtdiode LED ist dann die Differenz der Spannungen an den Anschlüssen C und D.

## Patentansprüche

1. Verfahren zur Temperaturregelung mindestens einer LED (LED), bei dem über eine Rückkoppelschleife der Flussstrom der LED (LED) durch Pulsweitenmodulation in Abhängigkeit vom gemessenen Spannungsabfall an einem ohmschen Widerstand (R3) in Reihe zur mindestens einen LED (LED) derart geregelt wird, dass das ausgesendete Licht der mindestens einen LED (LED) konstant ist, **dadurch gekennzeichnet, dass** erstens der Spannungsabfall am Widerstand (R3) in Reihe zur mindestens einen LED (LED) gemessen wird und der Spannungsabfall an einem Widerstand (R7) parallel zur mindestens einen LED (LED) gemessen wird, dass zweitens die beiden gemessenen Spannungen voneinander subtrahiert werden, dass drittens durch Vergleich des Ergebnisses der Subtraktion mit einer abgespeicherten Zuordnungsvorschrift beinhaltend eine Zuordnung zwischen Spannungsabfall an der mindestens einen LED (LED) und dem ausgesendetem Licht der mindestens einen LED (LED) das aktuell ausgesendete Licht der mindestens einen LED (LED) ermittelt wird, dass viertens der ermittelte Wert des Lichts mit einem abgespeicherten Sollwert des Lichts verglichen wird, und fünftens durch Berechnung einer geeigneten Pulsweite das Licht der mindestens einen LED (LED) durch Pulsweitenmodulation des Flussstromes auf den Sollwert des Lichts geregelt wird.

2. Leistungsschaltung zur Generierung eines konstanten LED-Signals beinhaltend eine getaktete Stromquelle (LM2575) zur Pulsweitenmodulation des Flussstroms mindestens einer LED (LED) in Abhängigkeit von einem gemessenen Spannungsabfall an einem ohmschen Widerstand (R3) in Reihe zur mindestens einen LED (LED), **dadurch gekennzeichnet, dass** mindestens eine Verarbeitungsschaltung vorgesehen ist, um die Pulsweite gemaess dem Verfahren nach Anspruch 1 zu berechnen.

3. Bahnsignalanlage zur Generierung eines Lichtpunktes aus mehreren LEDs, beinhaltend eine Leistungsschaltung nach Anspruch 2.

## Claims

1. Method for regulating the temperature of at least one LED (LED), in which the flux flow of the LED (LED) is regulated via a feedback loop by pulse width modulation as a function of the measured drop in voltage at an ohmic resistor (R3) in series to at least one LED (LED) in such a way that the transmitted light of the at least one LED (LED) is constant, **characterised in that** firstly the drop in voltage at resistor (R3) in series to the at least one LED (LED) is measured and the drop in voltage at a resistor (R7) parallel to the at least one LED (LED) is measured, secondly the Lwo measured voltages are subtracted from one another, thirdly, by comparing the result of the subtraction with a stored allocation instruction containing an allocation between the drop in voltage at the at least one LED (LED) and the transmitted light of the at least one LED (LED), the light of the at least one LED (LED) currently being transmitted is estimated, fourthly the estimated value of the light is compared with a stored desired value of the light and fifthly the light of the at least one LED (LED) is regulated to the desired value of the light by pulse width modulation of the flux flow by calculating a suitable pulse width.

2. Power circuit for generating a constant LED signal containing a clocked current source (LM2575) for pulse width modulation of the flux flow of at least one LED (LED) as a function of a measured drop in voltage at an ohmic resistor (R3) in series to the at least one LED (LED), **characterised in that** at least one processing circuit is provided to calculate the pulse width according to the method according to claim 1.

3. Railway signalling system for generating a light spot from several LEDs containing a power circuit according to claim 2.

## Revendications

1. Procédé permettant de régler la température au moins d'une diode électroluminescente (DEL), dans lequel le courant de flux des diodes électroluminescentes (DEL) est réglé par la modulation d'impulsions en fréquence par l'intermédiaire d'une boucle d'asservissement en fonction de la chute de tension mesurée sur une résistance ohmique (R3) en série au moins d'une diode électroluminescente (DEL), de telle manière que la lumière émise au moins d'une diode électroluminescente (DEL) soit constante, **caractérisé en ce que**, premièrement la chute de tension sur la résistance (R3) en série d'au moins une diode électroluminescente (DEL) est mesurée et la chute de tension est mesurée sur une résistance (R7) parallèle au moins d'une diode électroluminescente (DEL), deuxièmement les deux tensions mesurées sont soustraites l'une de l'autre, troisièmement la lumière actuellement émise au moins d'une diode électroluminescente (DEL) est détectée par une comparaison du résultat de la soustraction avec une prescription d'association mémorisée contenant une association entre la chute de tension sur au moins une diode électroluminescente (DEL) et la lumière émise au moins d'une diode électroluminescente (DEL), quatrièmement la valeur déterminée de la lumière est comparée à une valeur de la lumière prescrite mémorisée, et cinquièmement la lumière au moins d'une diode électroluminescente (DEL) est réglée par la modulation d'impulsions en largeur d'un courant de flux sur la valeur prescrite de la lumière par l'intermédiaire du calcul d'une largeur d'impulsion appropriée.

2. Convertisseur de puissance permettant de générer un signal de DEL constant comprenant une source de courant synchronisée (LM2575) pour la modulation d'impulsions en largeur du courant de flux au moins d'une diode électroluminescente (DEL) en fonction d'une chute de tension mesurée sur une résistance ohmique (R3) en série au moins d'une diode électroluminescente (DEL), **caractérisé en ce que** au moins un circuit de traitement est prévu pour calculer la largeur d'impulsion selon le procédé de la revendication 1.

3. Dispositif de signalisation ferroviaire permettant de générer un point lumineux à partir de plusieurs DEL, comprenant un convertisseur de puissance selon la revendication 2.
